# EUROPEAN PATENT APPLICATION

(11) **EP 4 593 252 A1**
(43) Date of publication of application: **30.07.2025**
(21) Application number: 24153863.6
(22) Date of filing: 25.01.2024
(51) Int. Cl.: H02J 50/80, H04B 5/79

(54) **WIRELESS POWER TRANSFER**

(71) Applicant: Koninklijke Philips N.V., 5656 AG Eindhoven (NL)
(72) Inventor: VELTMAN, Eddy Gerrit, 5656 AG Eindhoven (NL); STARING, Antonius Adriaan Maria, 5656 AG Eindhoven (NL); AGAFONOV, Aleksei, 5656 AG Eindhoven (NL)
(74) Representative: Philips Intellectual Property & Standards

(57) **Abstract**

A power transmitter (101) provides wireless power to a power receiver (105) via an electromagnetic power transfer signal. The power transmitter (101) comprises a data receiver (207, 209) which performs a receive operation to receive load modulation data symbols modulated onto the power transfer signal by the power receiver. Each load modulation data symbol value is represented by a different modulation chip sequence comprising a plurality of chips. During non-communication time intervals, the power receiver load modulates an idle chip sequence onto the power transfer signal. A chip difference determiner (211) determines a chip difference measure indicative of a difference between a reference chip sequence and a received idle chip sequence. A channel quality determiner (213) determines a communication channel quality measure for the load modulation communication channel in dependence on the chip difference measure. An adapter (215) adapts a parameter of the receive operation in dependence on the communication channel quality measure.

## Description

### FIELD OF THE INVENTION

The invention relates to wireless power transfer and in particular, but not exclusively, to communication in a power transfer system such as the Qi wireless power transfer Specifications.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device.

In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally.

Such wireless power transfer arrangements may advantageously be designed such that the power transmitter device can be used with a range of power receiver devices. In particular, a wireless power transfer approach, known as the Qi Specifications, has been defined and is currently being further developed. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

Based on the Qi Specification, an approach known as the Ki specification is being developed for high power applications, such as specifically for Kitchen appliances.

In order to support efficient wireless power transfer, wireless power transfer systems, such as Qi or Ki based systems, utilize substantial communication between the power transmitter and the power receiver. For communication systems such as Qi, communication from the power receiver to the power transmitter is arranged to use load modulation of the power transfer signal. Communication from the power transmitter to the power receiver may accomplished by modulating the power transfer signal using amplitude or frequency modulation.

Whereas communicating using load modulation of the power transfer signal transferring power to the power receiver may provide efficient operation in many scenarios, it also tends to have some associated disadvantages. For example, the load modulation may tend to introduce some electrical noise including both noise to the signals of the devices as well as radiated electromagnetic noise. The load modulation may increase electromagnetic interference to other devices and maintaining sufficient or optimal electromagnetic compatibility has been found to be challenging.

It has also been found in practice that load modulation may result in the introduction of undesired spurious oscillations to the drive signal and the power transfer signal. The power transfer path in a wireless power transfer system tends to include a significant amount of inductance and tends to have a resonant behavior. As such load modulation tends to affect the power transfer path and indeed the communication path. Thus, the load modulation also results in noise and interference to the communication itself (self interference). This differs substantially from other communication systems where random noise or interference from other transmissions are the main causes of transmission errors.

Another disadvantage is that the load modulation of the power transfer signal may result in acoustic noise. Such noise may result from the impact on mechanical elements of the variations to the electromagnetic field caused by the load modulation, and specifically it may cause mechanical elements to move and vibrate resulting in potential acoustic noise being generated.

Also, load modulation communication, as e.g. used in the initial versions of the Qi Specifications, may not have perfect reliability and some bit errors tend to occur in some cases. For example, high levels of noise or self-interference may result in bit errors and/or may require an increased modulation depth which may result in increased electrical or acoustic noise resulting from the load modulation.

In order to mitigate or reduce some disadvantageous effects of load modulation, it has been proposed to use a chip sequence based communication where each data symbol may be represented by a sequence of chips that are load modulated onto the power transfer signal. However, whereas this may improve communication in many implementations, it tends to not result in ideal performance and a number of disadvantages may persist. For example, in some scenarios, the communication quality and reliability may not be ideal and e.g. depending on the power transfer characteristics and operating point, the number of communication errors may increase which may lead to reduced overall performance and power transfer.

Hence, an improved approach would be advantageous, in particular, an improved approach for load modulation allowing increased flexibility, reduced cost, reduced complexity, improved power transfer operation, increased reliability, reduced communication errors, improved backwards compatibility, improved electromagnetic compatibility, reduced electrical and/or acoustic noise, improved communication, a more stable power transfer, reduced power transfer variations, increased stability, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a power transmitter for wirelessly providing power to a power receiver via an electromagnetic power transfer signal, the power transmitter comprising: an output circuit comprising a transmitter coil arranged to generate the power transfer signal in response to a drive signal being applied to the output circuit; a driver arranged to generate the drive signal; a data receiver arranged to perform a receive operation to receive load modulation data symbols modulated onto the power transfer signal (by the power receiver), each load modulation data symbol value being represented by a different modulation chip sequence, the receive operation comprising determining received data symbol values in dependence on a correlation between received chip sequences and the different modulation chip sequences; a chip difference determiner arranged to determine a chip difference measure indicative of a difference between a reference chip sequence and an idle chip sequence modulated onto the power transfer signal during at least part of some non-communication time intervals (where no modulation chip sequence is modulated onto the power transfer signal), the chip difference determiner being arranged to determine the chip difference measure in dependence on a comparison of received chip sequences to the reference chip sequence; a channel quality determiner arranged to determine a communication channel quality measure in dependence on the chip difference measure (the communication channel quality measure being indicative of a communication quality of a communication channel (from the power receiver to the power transmitter) for the load modulation); and an adapter arranged to adapt a parameter of the receive operation in dependence on the communication channel quality measure.

The invention may allow improved performance in many embodiments and may in particular in many embodiments allow improved communication between a power receiver and a power transmitter. The approach may allow, facilitate, or enable improved power transfer in many embodiments.

In many embodiments and scenarios, the approach may allow the receive operation to be dynamically adapted to reflect the current communication channel conditions and properties. The approach may for example reduce the risk of particular power transfer operating points having a highly degraded communication performance. It may in many cases reduce error rates and/or allow more a more reliable communication at higher data rates by adapting the operation to reflect the impact of the current communication channel properties on the channel data symbols. For example, the adapter 215 may adapt the sample timing or other communication parameters if the current conditions are such that the communication channel does not have a sufficient quality (e.g. if it results in too high a (chip/bit/symbol) error rate).

The approach may in many scenarios achieve a reduced impact of load modulation on the power transfer performance and operation. In many embodiments, reduced variation in the properties and operation of the input circuit in extracting power from the power transfer signal may be achieved. A more constant operation may be achieved in many embodiments. A reduced voltage variation for the load being supplied by the power receiver may be achieved in many scenarios.

During the non-communication time intervals, there may be no communication of information data from the power receiver to the power transmitter. In some embodiments, the data transmitter may be arranged to control the variable load during non-communication time intervals so that the resulting modulation loading does not match any modulation loading pattern that represents a possible data symbol value.

During the communication time intervals, the data transmitter 509 may be arranged to vary the variable load such that the modulation chip sequence/modulation loading pattern represents a data symbol value for the data symbol. Each possible data symbol value may be represented by/linked with one modulation chip sequence/modulation loading pattern with the modulation chip sequence/modulation loading patterns being different for different data symbol values. The data transmitter may be arranged to transmit a first symbol value by controlling the variable load to apply the modulation chip sequence/modulation loading pattern linked with the first symbol value.

The modulation loading is determined by the load value of the variable load. The variable load may be a modulation load with the load modulation being applied to the power transfer signal by the variations in the variable load. The modulation loading may be (part of) the loading of the power transfer signal that is varied in response to the data symbols being transmitted.

Each communication time interval may correspond to a time interval during which a data packet is transmitted from the power receiver to the power transmitter. Each non-communication time interval may correspond to a time interval between the communication time intervals. Each non-communication time interval may correspond to a time interval during which no data packet is transmitted from the power receiver to the power transmitter.

Each different modulation chip sequence may comprise a sequence of a plurality of chips, each chip having a value represented by a load modulation pattern. A chip value may be a binary value.

In some embodiments, the chip difference measure may directly be used as the communication channel quality measure. In other embodiments, the latter may for example be determined as a function of the former.

In some embodiments, the receive operation includes determining chip values of the received chip sequences from load measurement samples.

The load measurement samples may be samples of a signal indicative of the loading of the power transfer signal. The load measurement samples could be samples of the drive signal. The load measurement samples may be determined from measurements of the drive signal.

The power transmitter may comprise a load measurer arranged to generate load measurement samples from measurements of a parameter of the drive signal and/or a property dependent on a current through and/or voltage over the transmitter coil 103.

According to an optional feature of the invention, the receive operation includes determining chip values of the received chip sequences from load measurement samples, and the adapter is arranged to adapt a sample timing for the load measurement samples.

This may provide particularly advantageous performance in many embodiments. It may in many scenarios and implementations provide a particularly efficient mitigation or reducing in reduction of communication quality for various operating points.

The load measurement samples may be samples of a signal indicative of the loading of the power transfer signal. The load measurement samples could be samples of the drive signal. The load measurement samples may be determined from measurements of the drive signal.

According to an optional feature of the invention, the adapter is arranged to adapt a decision threshold for determining chip values.

This may provide particularly advantageous performance in many embodiments. It may in many scenarios and implementations provide a particularly efficient mitigation or reduction in degradation of the communication quality for various operating points.

According to an optional feature of the invention, the different modulation chip sequences and the reference chip sequence have identical lengths.

This may provide improved operation and/or facilitated implementation in many embodiments and scenarios. It may in particular in many scenarios allow functionality and operations to be reused for multiple functions and operations.

According to an optional feature of the invention, the reference chip sequence comprises an even number of chips.

This may provide improved operation and/or facilitated implementation in many embodiments and scenarios. It may allow facilitated determination of the chip difference measure and communication channel quality measure in many embodiments. The reference chip sequence may be generated as an M-sequence with an additional chip (e.g. selected for the sequence to have an equal number of different chip values).

According to an optional feature of the invention, the reference chip sequence comprises binary chips with an equal number of chips of each binary data chip value.

This may provide improved operation and/or performance, and/or may facilitate implementation in many embodiments and scenarios.

According to an optional feature of the invention, all chips of the reference chip sequence have identical chip values.

This may provide improved operation and/or performance, and/or may facilitate implementation in many embodiments and scenarios.

According to an optional feature of the invention, all chips of the idle chip sequence have identical chip values.

This may provide improved operation and/or performance, and/or may facilitate implementation in many embodiments and scenarios.

According to an optional feature of the invention, the reference chip sequence may be identical to one of the different modulation chip sequences.

This may provide improved operation and/or performance, and/or may facilitate implementation in many embodiments and scenarios.

According to an optional feature of the invention, each of the different modulation chip sequences comprises an even number of chips.

This may provide improved operation and/or performance, and/or may facilitate implementation in many embodiments and scenarios.

According to an optional feature of the invention, the reference chip sequence and the idle chip sequence are different sequences.

This may provide improved operation and/or performance, and/or may facilitate implementation in many embodiments and scenarios.

According to an optional feature of the invention, the data receiver is arranged to detect a presence of a synchronization chip sequence modulated on to the power transfer signal, the receive operation comprising detecting the presence of the synchronization chip sequence in dependence on a correlation between received chip sequences and the synchronization chip sequence, and the data receiver is arranged to adapt a timing of the receive operation in response to the detection of the presence of the synchronization chip sequence.

This may provide improved operation and/or performance, and/or may facilitate implementation in many embodiments and scenarios. The synchronization chip sequence and the reference chip sequence may be the same chip sequences. The synchronization chip sequence and the idle chip sequence may be different chip sequences.

According to another aspect of the invention, there is provided power receiver for wirelessly receiving power from a power transmitter via an electromagnetic power transfer signal, the power receiver comprising: an input circuit comprising a receiver coil arranged to extract power from the power transfer signal; a variable load coupled to the input circuit and arranged to apply a modulation loading to the input circuit; a data transmitter arranged to transmit data symbols to the power transmitter by controlling the variable load to load modulate the power transfer signal during communication time intervals, the data transmitter being arranged to modulate load modulation data symbols onto the power transfer signal with each load modulation data symbol value being represented by a different modulation chip sequence; an idle sequence transmitter arranged to control the variable load to load modulate an idle chip sequence onto the power transfer signal during at least some time intervals outside of the communication time intervals.

According to another aspect of the invention, there is provided a method of operation for a power transmitter wirelessly providing power to a power receiver via an electromagnetic power transfer signal, the power transmitter comprising: an output circuit comprising a transmitter coil arranged to generate the power transfer signal in response to a drive signal being applied to the output circuit; and the method comprising: generating the drive signal; performing a receive operation to receive load modulation data symbols modulated onto the power transfer signal, each load modulation data symbol value being represented by a different modulation chip sequence, the receive operation comprising determining received data symbol values in dependence on a correlation between received chip sequences and the different modulation chip sequences; determining a chip difference measure indicative of a difference between a reference chip sequence and an idle chip sequence modulated onto the power transfer signal during at least part of some non-communication time intervals, the chip difference determiner being arranged to determine the chip difference measure in dependence on a comparison of received chip sequences to the reference chip sequence; determining a communication channel quality measure in dependence on the chip difference measure; and adapting a parameter of the receive operation in dependence on the communication channel quality measure.

According to another aspect of the invention, there is provided a method of operation for a power receiver wirelessly receiving power from a power transmitter via an electromagnetic power transfer signal, the power receiver comprising: an input circuit comprising a receiver coil arranged to extract power from the power transfer signal; and a variable load coupled to the input circuit and arranged to apply a modulation loading to the input circuit; the method comprising: transmit data symbols to the power transmitter by controlling the variable load to load modulate the power transfer signal during communication time intervals, load modulation data symbols being modulated onto the power transfer signal with each load modulation data symbol value being represented by a different modulation chip sequence; and controlling the variable load to load modulate an idle chip sequence onto the power transfer signal during at least some time intervals outside of the communication time intervals.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of elements of a power transmitter;
FIG. 3 illustrates an example of a half bridge inverter for a power transmitter;
FIG. 4 illustrates an example of a full bridge inverter for a power transmitter;
FIG. 5 illustrates an example of elements of a power receiver in accordance with some embodiments of the invention;
FIG. 6 illustrates an example of chip sequences; and
FIG. 7 illustrates an example of data modulation structure for a wireless power transfer system in accordance with some embodiments of the invention.

### DETAILED DESCRIPTION OF THE EMBODIMENTS

The following description focuses on embodiments of the invention applicable to a high power wireless power transfer system utilizing a power transfer approach such as known from the Qi Specification or the Ki Specification. However, it will be appreciated that the invention is not limited to this application but may be applied to many other wireless power transfer systems.

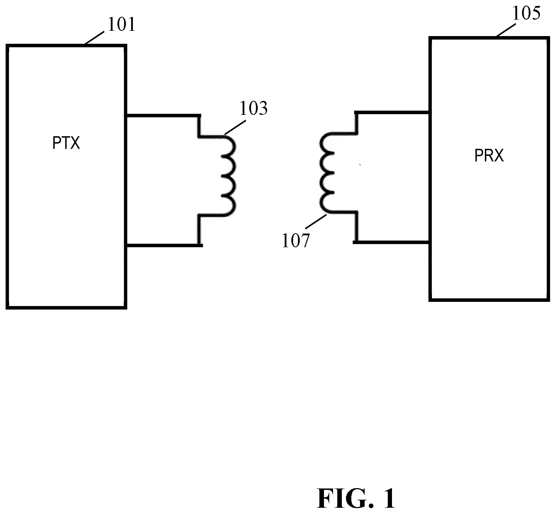

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may typically have a frequency between around 20 kHz to around 500 kHz, and in many practical systems may be around 120-150 kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

In the following, the operation of the power transmitter 101 and the power receiver 105 will be described with specific reference to an embodiment generally in accordance with the Qi or Ki Specifications (except for the herein described (or consequential) modifications and enhancements).

Many wireless power transfer systems utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The power receiver sends this error signal to the power control function in the power transmitter to reduce the static error, ideally to zero.

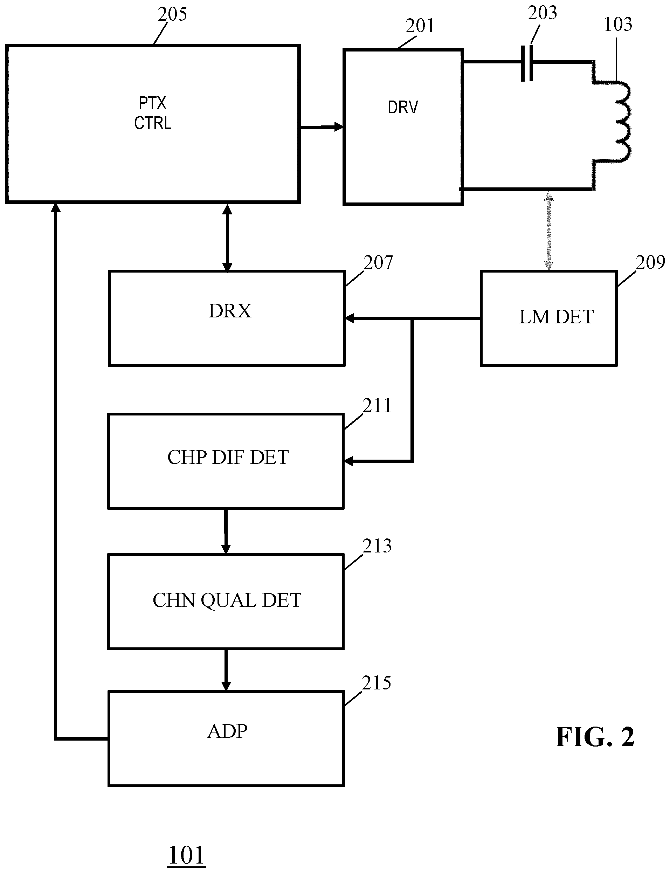

FIG. 2 illustrates elements of the power transmitter 101 of FIG. 1 in more detail.

The power transmitter 101 includes a driver 201 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 203. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

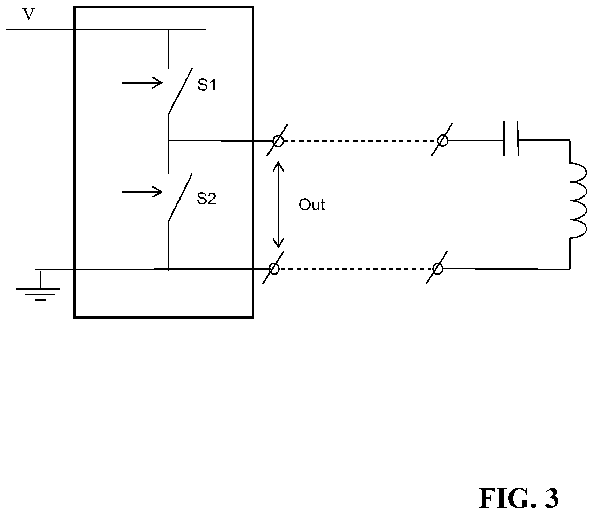

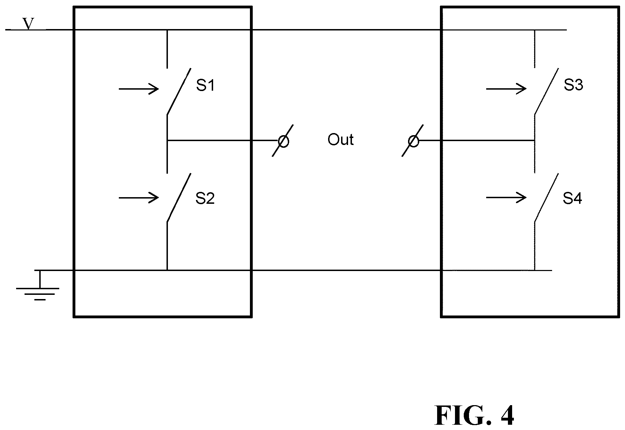

The driver 201 generates the current and voltage which is fed to the output resonance circuit and thus to the transmitter coil 103. The driver 201 is typically a drive circuit in the form of an inverter which generates an alternating signal from a DC Voltage. The output of the driver 201 is typically a switch bridge generating the drive signal by the appropriate switching of switches of the switch bridge. FIG. 3 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 4 shows a full-bridge switch bridge/ inverter. The switches S1 and S2 are controlled such that they are never closed at the same time. The switches S3 and S4 are controlled such that they are never closed at the same time. Alternatingly switches S1 and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 205 which is arranged to control the operation of the power transmitter 101 in accordance with the desired operating principles. Specifically, the power transmitter 101 may include many of the functionalities required to perform power control in accordance with the Qi or Ki Specification.

The power transmitter controller 205 is in particular arranged to control the generation of the drive signal by the driver 201, and it can specifically control the power level of the drive signal, and accordingly the level of the generated power transfer signal. The power transmitter controller 205 comprises a power loop controller controlling a power level of the power transfer signal in response to the power control messages received from the power receiver 105 during the power transfer phase.

The power transmitter 101 further comprises a data receiver 207 which is arranged to receive data transmitted to the power transmitter 101 from the power receiver 105. The data is transmitted by load modulation where the power receiver 105 changes a loading of the power transfer signal in accordance with data symbols being communicated. The data receiver 207 is coupled to a load modulation detector 209 which is coupled to the output circuit 103, 203 and which is arranged to detect variations in/ perform measurements of the load of the power transfer signal and to generate a received chip sequences based on the variations/measurements. The load modulation detector 209 may specifically measure the loading of the power transfer signal by measuring a power, current, and/or voltage for the transmitter coil 103. It may specifically sample the load at given sample instants and determine the load value for the sample times accordingly. The data receiver 207 is arranged to determine received data symbols based on the detected loading values. Specifically, the load modulation detector 209 may determine received chip sequences from the measured load values and the data receiver 207 may determine the received data symbol as the data symbol that with highest probability would result in the received chip sequence (maximum likelihood demodulation). It will be appreciated that many different approaches for receiving load modulation will be known to the skilled person.

The received data symbols are fed from the data receiver 207 to the power transmitter controller 205 which may adapt the operation of the power transfer in response to this data. For example, power error data may be received and the power transmitter controller 205 may adapt the power level of the drive signal thereby implementing a power control loop with the power receiver 105.

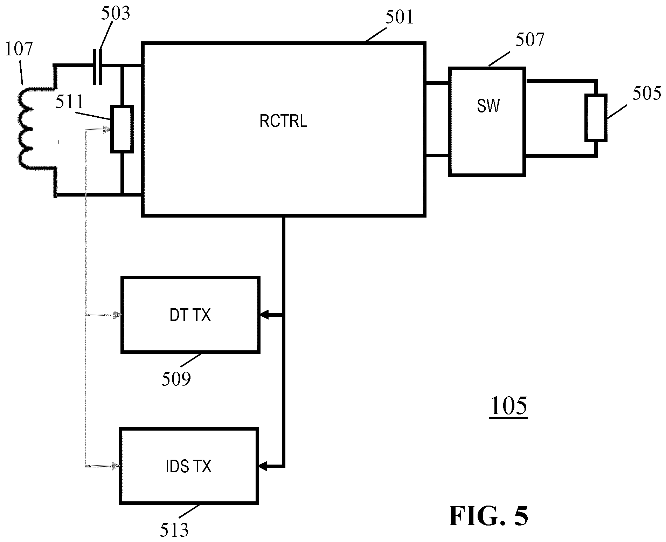

FIG. 5 illustrates some exemplary elements of the power receiver 105.

In the example, the receiver coil 107 is coupled to a power receiver controller 501 via a capacitor 503 which together with the receiver coil 107 forms an input resonance circuit. Thus, the power transfer may be a resonant power transfer between resonance circuits. In other embodiments, only one, or none, of the power receiver and the power transmitter may utilize a resonance circuit for power transfer.

The power receiver controller 501 couples the receiver coil 107 to a load 505 via a switch 507. The power receiver controller 501 includes a power control path which converts the power extracted by the receiver coil 107 into a suitable supply for the load 505. In some embodiments, the power receiver controller 501 may provide a direct power path which simply connects the input resonance circuit to the switch 507 or load 505, i.e. the power path of the power receiver controller 501 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 507 may only be present in some embodiments and that in some embodiments the load 505 may permanently be coupled to the input resonance circuit.

In addition, the power receiver controller 501 may include various power receiver controller functionality required to perform power transfer, and in particular functions required to perform power transfer in accordance with the Qi or Ki Specifications.

The power receiver 105 is arranged to transmit data to the power transmitter 101. Such data may specifically include power control loop error messages used to implement a feedback power loop for controlling the power level of the power transfer signal during power transfer as will be known to the skilled person. The power receiver may in many embodiments be capable of transmitting a range of different messages serving different purposes as known to the skilled person. For example, a range of different messages such as those specified in the Qi Specifications may be transmitted. Messages may comprise one or more data bits/ symbols.

The power receiver is arranged to transmit messages to the power transmitter using load modulation. As will be well known to the skilled person, for load modulation, changes in the loading of the power transfer signal may be introduced by the power receiver where the changes are in accordance with data values to be transmitted. These changes can then be detected by the power transmitter in order to decode the data from the power receiver.

Load modulation may be used as the method for the power receiver to communicate control messages, or other data, to the power transmitter in accordance with e.g. the Qi wireless power standard.

There are typically two main ways of performing load modulation, namely either to directly change the resistive load/ power extraction of the input circuit and/or to detune the resonance of the input circuit e.g. by changing a reactive loading of the input circuit (typically switching a capacitor in/out in line with data to be transmitted). Similar approaches may be used by the power receiver for load modulating the power transfer signal. Thus, load modulation may use real and/or reactive load changes.

Correspondingly, at the power transmitter, detection approaches may be used to detect the load variations. For example, a direct measurement of a power level or current amplitude of the drive signal may be used as indications of the loading, and thus of the load modulation variations introduced by the power receiver.

The power receiver 105 comprises a data transmitter 509 which is arranged to transmit data to the power transmitter 101 by load modulating the power transfer signal.

In the example, the data transmitter 509 is arranged to control a variable load 511 that provides a modulation loading of the power transfer signal. Variations in the value of the variable load 511 results in a changed effective load provided to the receiver coil 107. As a result, the induced power (real and/or reactive) changes and thus the loading of the power transfer signal by the receiver coil 107 changes. The loading of the receiver coil 107/the power transfer signal is dependent on the value of the variable load. Specifically, changes in the value of the variable load results in changes in the loading of the power transfer signal. The data transmitter 509 is arranged to load modulate the power transfer signal by varying the value of the variable load thereby varying the modulation loading of the power transfer signal. The modulation loading is a variable loading of the power transfer signal providing the load modulation of the power transfer signal. The modulation loading can be considered to be/correspond to/ represent a load and/or impedance value of the variable load.

Thus, the data transmitter 509 is arranged to change the value of the variable load in dependence on data symbol values being transmitted thereby providing a varying modulation loading of the power transfer signal.

The data transmitter 509 is coupled to the variable load 511 and is arranged to modify this in response to the data symbols to be transmitted. Thus, the data transmitter 509 is arranged to vary the variable load to provide a modulation loading of the power transfer signal.

As will be described in more detail later, the data transmitter 509 may specifically be arranged to provide a modulation loading pattern/modulation chip sequence for each data symbol where the modulation loading pattern/ modulation chip sequence is dependent on the data symbol value. The modulation loading pattern/ modulation chip sequence is different for different data symbol values. The power transmitter may accordingly estimate a modulation load pattern for the power transfer signal and determine the data symbol value based on this detected modulation load pattern/chip sequence, e.g. by selecting the data symbol value that is most likely to have resulted in the received load pattern/chip sequence (maximum likelihood demodulation).

In many embodiments, the variable load may be a binary variable load having two possible load values. Further, in many embodiments, the variable load may be a purely resistive load or a purely reactive load. For example, the variable load may be a resistor or capacitor that can be switched between being decoupled from the input circuit and being coupled to the input circuit (e.g. effectively being switched on/off). The data transmitter 509 may be arranged to control the switch that switches the resistor/ capacitor in out.

For example, the data transmitter 509 may be arranged to switch in/out a communication capacitor (or other impedance) e.g. positioned in parallel with the power receiver controller 501 or with the resonance capacitor 503 thereby being able to vary the resonance frequency and the loading of the power transfer signal.

The data transmitter 509 may be coupled to the power receiver controller 501 and may be arranged to receive data from the power receiver controller 501 for transmission to the power transmitter 101.

For example, the data transmitter 509 may receive power error control data from the power receiver controller 501 and may transmit corresponding power error control messages to the power transmitter 101 using load modulation. In operation, the system is typically arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver.

The power transmitter 101 and power receiver 103 use a load modulation approach (in the direction from the power receiver to the power transmitter) which modulate each symbol using a modulation chip sequence comprising a plurality of chips. The data transmitter 509 is specifically arranged to transmit data symbols by load modulating the power transfer signal by a sequence of modulation load values corresponding to a chip sequence. The data transmitter 509 may transmit the data symbols using an approach that is e.g. similarly to a Direct Sequence Spread Spectrum (DSSS) modulation which uses a chip sequence to modulate the data symbols. The data symbols/ bits are modulated by a (typically pseudorandom) bit sequence also referred to as a spreading sequence. Each spreading-sequence "bit", which is commonly known as a chip, has a much shorter duration (larger bandwidth) than the original message bits/symbols.

Such an approach may allow reduced load depth resulting in reduced (or no) audible noise and rectified voltage ripple.

In some embodiments each symbol is represented by a modulation chip sequence comprising a plurality of chips, and typically with a sequence comprising 5 to 1023 chips. Thus, rather than simply varying the load in accordance with each symbol or bit, the data transmitter 509 may be arranged to transmit a given symbol (typically a bit) by a series of load changes and variations where the changes and variations are different for each symbol. Specifically, a chip sequence may be defined for each symbol and when transmitting a given symbol, the data transmitter 509 may retrieve the chip sequence for that specific symbol and proceed to load modulate the power transfer signal in accordance with the chip sequence for the symbol.

In many cases, each chip may be directly linked with a constant load level during the chip duration. For example, for binary chip values, each chip may be represented by the variable load 511 having one of two values, such as typically a modulation load (mostly a capacitor or resistor) being switched in or out of the circuit during the chip interval. Thus, a chip value of "0" may be represented by the modulation load being switched out and a chip value of "1" may be represented by the modulation load being switched in (or vice versa). In some embodiments, each chip may be differentially encoded, such as a load transition occurring or not, or with the direction of a transition indicating the chip value. For example, a chip value of "0" may be represented by the modulation load transitioning from a high load to a low load during the chip interval and a chip value of "1" may be represented by the modulation load transitioning from a low load to a high load during the chip interval (or vice versa).

In some embodiments, each chip of a chip sequence may be represented by a modulation loading transition occurring during the chip. Each load modulation chip in such case thus comprises at least two different modulation loading values/ values of the variable load. For example, as for a differential data symbol modulation, the individual chips may be modulated by a bi-state transition approach. For example, one chip value may be represented by a transition from a lower modulation loading to a higher modulation loading, and another chip value may be represented by a transition from a higher modulation loading to a lower modulation loading. In such examples, each chip sequence may be represented by a modulation loading pattern that has two modulation loading values for each chip.

Such an approach, also referred to as Differential-Direct Sequence Spread Spectrum (D-DSSS), may provide substantial advantages by allowing a receiver to determine the chip values simply by considering the difference between two measured load values for each chip. However, further it may increase the switch rate and may make this more predictable thereby allowing an improved correspondence between the switch operation in the communication time intervals and the non-communication time intervals.

In some embodiments, the modulation chip sequence for each possible data symbol value may accordingly comprise a load modulation chip sequence of at least 5, and in some cases at least 8,16, or 32, load modulation chips.

Similarly, as will be described in more detail later, the power transmitter may detect the load modulation by considering the whole chip sequence, and specifically may seek to determine the received symbol as the one for which the measured load variation chip pattern most closely matches the chip sequence pattern for that symbol.

Thus, in some embodiments a direct sequence spread spectrum load modulation may be used with each data symbol value being represented by a different modulation chip sequence/ loading pattern.

Such an approach may in particular allow the modulation depth, i.e. the magnitude of the load variations to be reduced substantially which may for example reduce electromagnetic noise and interference, may reduce acoustic noise, and may reduce spurious oscillations. It may also in many embodiments result in improved signal to noise ratios and may result in a substantially improved and often more reliable communication with e.g. often a lower bit error rate. Thus, a general overall improved power transfer can be achieved.

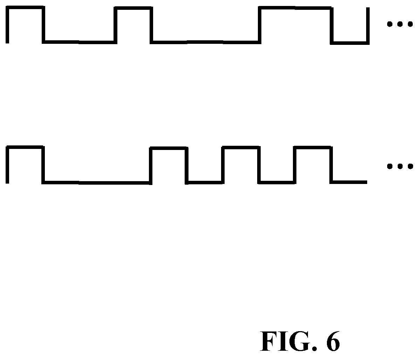

FIG. 6 illustrates an example of parts of two possible modulation chip sequences/ loading patterns. Each chip sequence comprises a sequence of chips. Typically, the set of chip values is two, corresponding to a binary chip sequence. A symbol time is thus divided into a plurality of chip intervals with the chip sequences of the chips being different for different data symbols. Typically, each sequence includes at least ten chips, and often substantially more. In many embodiments, each chip sequence may have a length of 2^{N}-1 where N is an integer of typically no less than 4.

Each of a number of stored chip sequences may be assigned to one symbol. Thus, each possible data symbol value that may need to be transmitted to the power transmitter may have a linked/ associated modulation chip sequence/ modulation loading pattern. For example, where only two data symbols are possible, i.e. where a binary communication is implemented, the set of chip sequences may comprise only two chip sequences. Each possible data symbol value may be linked/ represented by one modulation chip sequence. Thus, for a given data symbol value to be transmitted, the corresponding/ linked modulation chip sequence is determined and modulated on to the power transfer signal by load modulation. For example, where only two data symbols are possible, i.e. where a binary communication is implemented, the set of chip sequences may comprise only two chip sequences.

In many embodiments, one or more chip sequences may be represented by a relationship to another chip sequence. For example, for binary communication, the data transmitter 509 may store a single modulation chip sequence corresponding to one of the binary data values. The chip sequence for the other binary data value may be represented by the same stored bit sequence as it may be given as the inverse of the stored bit sequence. Thus, often the set of chip sequences utilizes complementary inverse chip sequences for pairs of data symbols and therefore only half of the used chip sequences are typically explicitly stored/ determined in the data transmitter 509 with the remaining chip sequences being automatically and implicitly stored/ determined as the inverse of these.

Thus, in some embodiments, the modulation chip sequences may include inverse chip sequences. Equivalently, the same modulation chip sequence can be considered to represent two data symbol values, and specifically two binary data symbol values.

The modulation chip sequence is for a given data symbol to be transmitted selected from a set of modulation chip sequences, and in the example the data transmitter 509 provides a set of modulation chip sequences with each chip sequence being linked to a data symbol value. Typically, the set of modulation chip sequences comprises a chip sequence for each possible data symbol value. For example, if binary communication is used, the first set of chip sequences may comprise only two chip sequences. It will be appreciated that the data transmitter 509 may store the chip sequences in any suitable form and does not need to store a full sequence for each possible data symbol. For example, a given modulation chip sequence may be multiplied by a binary symbol value represented by the values 1, -1. At the receiving end, i.e. at the power transmitter, the data value may then be determined by a correlation with the given modulation chip sequence, and a determination of the corresponding binary data value dependent on whether this is a positive or negative correlation.

In many embodiments, binary communication may accordingly be used where only two data symbol values are possible (corresponding to a "0" bit value or a "1" bit value). In such cases, one bit value may be represented by a given chip sequence and the other bit value may be associated with the inverse bit sequence, i.e. the bit sequence that results from changing each chip value to the opposite value. The two bit sequences are thus typically complementary with one resulting from the other by multiplication by -1 (with the chip values being represented by +1 and -1).

A particular advantage in such a case is that demodulation is particularly easy as a single correlation can be used to differentiate between bit values as the magnitude of the correlation is the same for the chip sequences, but the signs of the correlation values are opposite.

It will be appreciated that it is equivalent to consider data symbols represented by inverse modulation chip sequences to be represented by one chip sequence or by two chip sequences. It will be appreciated that such a binary approach with two inverse chip sequences being used is equivalent to considering that the two possible binary values are modulated by the same chip sequence but with the data symbols having opposite data values (e.g. +1 and -1).

When the power receiver is about to transmit a data symbol, the value is fed to the data transmitter 509 from the power receiver controller 501 which proceeds to determine the chip sequence that is linked to the data symbol value to be transmitted.

The data transmitter 509 is arranged to modulate the chip sequence onto the power transfer signal. Specifically, a modulation load may be switched in and out (on/off) in line with the chips, i.e. the load may be changed in accordance with the variable load values of the modulation chip sequence/ loading pattern.

The chip sequence is selected from a set of chip sequences, and in the example the data transmitter 509 stores such a set of chip sequences with each chip sequence being linked to a data symbol value. Typically, the set of chip sequences comprises a chip sequence for each possible data symbol value. For example, if binary communication is used, the first set of chip sequences may comprise only two chip sequences.

Thus, the data transmitter 509 may be arranged to receive data symbols, typically from the power receiver controller 501, to be transmitted to the power transmitter, it may proceed to determine a corresponding chip sequence and load modulate the power transfer signal by the modulation chip sequence representing this chip sequence. Typically, the data symbols are binary but in some cases higher order modulation symbols may be used (i.e. with more than two possible values). In some cases, such higher order data symbols may correspond to a combination of received data bits. For example, two bits may be combined into a single quaternary data symbol. Such combination may be possible both when the data bits are related and when they are e.g. completely independent.

Longer chip sequences may provide improved noise suppression etc. but may also reduce the data rate as the symbol time increases for a given chip rate. Increased chip sequence lengths also increase complexity and resource demand, especially at the receiver where correlation with longer sequences may substantially require the number of computations required.

The chip sequences in the set are typically of the same length.

The system of FIGs. 1, 2, and 5 may utilize an approach which in many situations may address one or more of the issues associated with load modulation. Load modulation is employed, but each symbol is represented by a chip sequence comprising a plurality of chips, and typically with a sequence comprising 5 to 127 chips. Thus, rather than simply varying the load in accordance with each symbol or bit, the data transmitter 509 is arranged to transmit a given symbol (typically bit) by a series of load changes and variations where the changes and variations are different for each symbol. Specifically, a chip sequence may be defined for each symbol and when transmitting a given symbol, the data transmitter 509 may retrieve the chip sequence for that specific symbol and proceed to load modulate the power transfer signal in accordance with the chip sequence for the symbol.

The power transmitter may detect the load modulation by considering the whole sequence, and specifically the power transmitter may seek to determine the received symbol as the one for which a detected received chip sequence/load variation pattern most closely matches the chip sequence pattern for that symbol.

The load modulation detector 209 may as previously mentioned sample a current, voltage, or power of the transmitter coil 103 (or a related value such as a value of the drive signal or the supply signal to the inverter of the driver 201). It may then determine load values for each chip based on the sampled measurement, and indeed in many cases the measurement value may be used directly. The load modulation detector 209 may in some cases determine a binary received chip sequence, e.g. by selecting for each chip whether the measured load value is a high or low load value. In cases where differential encoding of the chip values is performed, the load modulation detector 209 may for example sample the signal/property twice in each chip time interval and determine the corresponding chip value depending on the direction/sign of the difference between the measurements. It will be appreciated that in some embodiments, the received chip sequence may be represented by hard decision data symbols/values (such as binary values) or may e.g. be determined as soft decision symbols/values (e.g. representing the magnitude of the difference in addition to the sign of the difference).

The data receiver 207 is arranged to determine load modulation data symbols received from the power receiver based on a correlation of the stored data symbol modulation chip sequences and the load variations of the power transfer signal. Specifically, in some embodiments, the load modulation receiver 207 may correlate the determined received chip sequence provided by the load modulation detector 209 with all the stored/possible data symbol chip sequences to determine a correlation value for each. In cases, such as the described binary case where some sequences are the inverse of each other, only one correlation may be performed with the sign of the correlation value reflecting the two possible chip sequences.

Thus, the data receiver 207 may correlate the receiver load variation sequence with the reference chip sequence(s) to determine a correlation value indicating how closely these match. The data receiver 207 may then determine the data symbol as one linked with the chip sequence for which the associated correlation value is sufficiently high.

The approach of using such Direct Sequence Spread Spectrum (DSSS) or Differential-Direct Sequence Spread Spectrum (D-DSSS) type approaches in the described system may provide a number of advantages. The approach may in particular allow the modulation depth, i.e. the magnitude of the load variations to be reduced substantially which may for example reduce electromagnetic noise and interference, may reduce acoustic noise, and may reduce spurious oscillations. It may also in many embodiments result in improved signal to noise ratios and may result in a substantially improved and often more reliable communication with e.g. often a lower bit error rate. Thus, a general overall improved power transfer can be achieved.

Further, in the described approach the use of such chip sequences/ modulation loading patterns may substantially reduce the switch noise/ voltage variations. The use of such longer sequences may reduce the modulation depth and the required change in modulation loading may be reduced. For example, a lower value of a switch capacitor may be implemented. This reduction may result in a smaller change in the resonance frequency/ operating point resulting in lower noise/ variations. Further, the approach allows for a much higher modulation loading switching, and indeed requires it for the same symbol rate to be maintained. The faster switching may further reduce the noise/ voltage variations as it is spread over a larger frequency range including higher frequencies. This results in the smoothing capacitor and the low pass filtering effect thereof being more efficient thereby providing a reduced noise level.

Further, not only may be the approach reduce noise and voltage variations during the communication time intervals, but it may further allow the noise to be reduced during the non-communication time intervals during which modulation loading variation may also be performed. In particular, the variations during the non-communication time intervals may be set to have switching properties (typically statistically or on average) that match those of the communication time intervals. In particular, a higher frequency switching of lower modulation loading changes may be used thereby reducing the switching noise substantially.

In the system, the power receiver does not continuously communicate data to the power transmitter but rather messages/data are only communicated during communication intervals which are separated by non-communication time intervals in which no data is transmitted. In some cases, the communication time intervals may be well defined to occur at regular intervals, and indeed the communication may be arranged to be in accordance with a repeating time frame of alternating communication time intervals and non-communication time intervals with each of these having fixed duration (and with the repeating time interval having a fixed period/duration). However, in many cases, the timing and duration of communication from the power receiver may be more ad-hoc and may not fit into a fixed pattern. For example, the power receiver may simply transmit data whenever there is a need for it and the power transmitter may detect when such transmissions occur and then proceed to extract the data. The transmission of a data message may for example be preceded by the transmission of a dedicated synchronization data/sequence which can more easily be detected by the power transmitter. Such ad-hoc data transmission may be advantageous in many systems including in particular many systems where only relatively small amounts of data are transmitted. In such systems, the communication time intervals, and consequently the non-communication time intervals, may have varying timings and durations.

In the approach, data communication is thus performed in communication time intervals that are interspersed with non-communication time intervals in which data symbols/ information data is not transmitted from the power receiver to the power transmitter.

During communication time intervals, a plurality of data symbols, and specifically bits, may be transmitted, and often a data packet is transmitted. In many embodiments, a communication time interval may have a duration no less than 1 msec and no more than 50 msec. In many embodiments, no less than 24 bits and in some cases no more than 48 bits may be transmitted during each communication time interval.

During a communication time interval, load modulation is used to communicate data from the power receiver to the power transmitter and thus a plurality and often many loading transitions occur. Typically, these occur relatively rapidly/ frequently, and in many embodiments the load transitions may be such that the average loading/ value of the variable load is substantially the same for all communication time intervals, and in some cases even for each modulation chip sequence.

In the described approach, no data symbols and no information are communicated during non-communication time intervals. However, despite no communication of information, the power receiver may be arranged to control the variable load to repeatedly transmit a modulation chip sequence and thus it may proceed to change the modulation loading during at least some, and typically all, of the non-communication time intervals. The power receiver specifically comprises an idle sequence transmitter 513 which is arranged to apply an idle chip sequence to the power transfer signal where the idle chip sequence is typically different from the modulation chip sequences (and typically from any synchronization chip sequence). In particular, a repeating idle chip sequence with a corresponding loading variation pattern may be applied by the data transmitter 509 during the non-communication time intervals.

In many embodiments, the loading variations of the idle chip sequence during the non-communication time intervals may be arranged to have substantially the same (average) properties as loading variations that occur during the communication time intervals. For example, the repeating idle chip sequence may be designed to have properties such that the average modulation loading is the same as for the modulation chip sequences for the data symbols and with the same average time between loading transitions/ changes as for the communication time intervals.

An advantage of such an approach is that modulation loading variations not only occur during the communication time intervals but are also continued into the non-communication time intervals, and in many cases such that at least average or typical properties of the loading variations are continued into the non-communication time intervals. This may reduce the impact and specifically the variations to the power transfer caused by load modulation, and specifically may reduce the voltage variations.

In addition to the continued communication of idle chip sequences during the non-communication time intervals providing a more consistent power transfer signal with reduced average load variations leading to an improved power transfer operation, the idle chip sequences are also actively used by the power transmitter to adapt the receive operation of the communication time intervals thereby improving the overall communication performance.

The power transmitter comprises a chip difference determiner 211 which is arranged to determine a chip difference measure that is indicative of a difference between a reference chip sequence and the idle chip sequence modulated onto the power transfer signal during at least part of some non-communication time intervals. The reference chip sequence may be a local replica of the modulation chip sequence or may be another sequence, such as for example a sequence of all "0"s or "1"s for a binary chip communication embodiment (or indeed in some cases, such as when differential chip encoding/modulation is used, the idle chip sequence may have constant chip values, such as for example a sequence of all "0"s or "1"s).

The chip difference measure is determined in dependence on a comparison of received chip sequences to the reference chip sequence. At least during non-communication time intervals, the load modulation detector 209 is arranged to forward the received chip sequence to the chip difference determiner 211 which is arranged to compare it to the reference sequence in order to generate the chip difference measure.

It will be appreciated that the timing used by the load modulation detector 209 to generate the received chip sequence may in many embodiments be based on the timing during the communication time intervals. For example, a sample clock signal may be generated by e.g. a phase locked loop which is controlled by a clock error signal generated during decoding of data symbols generated during the communication time intervals (for example based on the timing of the chip load transitions). In other embodiments, individual loops may e.g. be operated for the communication time intervals and non-communication time intervals. Similarly, the timing of the start and end of the sequences may be based on symbol/sequence phase locked loops that are biased towards maximum correlation values during the communication time intervals. It will be appreciated that many different approaches and techniques for controlling timing of sampling and aligning of chip sequences to received signals are known to the skilled person, and that any suitable approach may be used without detracting from the invention.

In some embodiments, the chip difference determiner 211 may be arranged to determine the chip difference measure by determining how many of the chips of the received chip sequence differ from the chips of the reference chip sequence. In other embodiments, the chip difference measure may be generated by correlating the received chip sequence and the reference chip sequence and e.g. generating the chip difference measure as the resulting correlation value. It will be appreciated that different chip difference measures may be used in different embodiments and some specific approaches will be described in more detail later.

The chip difference determiner 211 is coupled to a channel quality determiner 213 which is arranged to determine a communication channel quality measure for the communication (channel) from the power receiver to the power transmitter. The channel quality determiner 213 is arranged to determine the communication channel quality measure in dependence on the chip difference measure, and thus the channel quality determiner 213 may on the basis of the chip difference measure proceed to generate an estimate of the channel quality for the load modulation communication channel from the power receiver to the power transfer signal using the power transfer signal.

The chip difference determiner 211 may proceed to determine how closely the determined chip difference measure is to the value that is expected for an ideal communication channel that does not introduce any distortion, noise, errors, etc., i.e. to a situation where ideal communication is performed. The communication channel quality measure may be determined to reflect how close the measured chip difference measure is to the ideal value such that the closer the measured chip difference measure is to the ideal value, the higher the quality that is indicated by the communication channel quality measure. For example, in a situation where the reference chip sequence is the same as the idle chip sequence, the received chip sequence is in the ideal case the same as the idle chip sequence and thus the reference chip sequence. Accordingly, in the ideal case with no errors, there are no chip differences and the chip difference measure indicates a difference of zero. The more noise and distortion introduced by the communication channel, the more chip errors, and thus differences, will occur and accordingly the number of chip differences indicate the communication channel with the quality of the channel (and thus typically the chip difference measure) being higher the fewer chip differences that are detected.

The channel quality determiner 213 is coupled to an adapter 215 which receives the communication channel quality measure from the channel quality determiner 213 and which proceeds to adapt a parameter of the receive operation in dependence on the communication channel quality measure. The adapter 215 is specifically arranged to adapt a parameter of the receive operation during the communication time intervals based on the communication channel quality measure. As will be described in more detail later, the adapter 215 may in some embodiments be arranged to adapt a sample timing parameter or a decision (threshold) parameter. However, in other embodiments, other parameters may be adapted, such as for example a (e.g. maximum) power level, a sample frequency, a filtering bandwidth etc. For example, if the communication channel quality measure indicates a quality that is below a given threshold, the power transmitter may be arranged to reduce the power level of the power transfer signal, which is also the communication carrier provided for the load modulation, thereby often reducing noise and distortion introduced to the load modulation of the power receiver.

The approach may provide additional improved performance and in particular may provide improved communication performance which in many conditions may reduce communication errors. Further, this can often be achieved with little additional complexity or resource overhead. Many of the operations required may already be implemented in order to receive the data from the power receiver (such as the chip sequence correlation/compensation which is often the most complex operation of the described operation). In particular, the inventors have realized that for wireless power transfer systems, such as Qi systems, using load modulation, communication may degrade very substantially at some particular operating points. Such communication "black hole" operating points can in particular be detected by the described approach which allows a more accurate channel quality estimate to be generated. Accordingly, the power transmitter can compensate or mitigate for the conditions by modifying the receive operation. A more efficient adaptation of the receive operation can be performed due to the relatively reliable communication channel quality measure being determined based on properties that are not just measured during the short communication time intervals.

In many embodiments, the adapter 215 is arranged to adapt a sample timing of the load measurements used to generate the received chip sequence dependent on the communication channel quality measure. As mentioned, the load modulation detector 209 is arranged to measure a parameter that is dependent on the loading of the transmitter coil 103 and thus which includes a load modulation component. Measurements are typically made at specific sample times/instants which are typically synchronized with the chips of the received signal. For example, as previously described a sample clock may be generated from a phase locked loop that is locked to the chip clock/timing of the chips of the load modulation of the power transfer signal.

Specifically, in many embodiments, the adapter 215 may be arranged to adapt a timing offset of the sampling instants with respect to the timing of the individual chips. For example, the sampling instant may be determined to have a given time offset to the sample clock generated by the PLL, and the adapter 215 may be arranged to adapt/change the offset in dependence on the communication channel quality measure.

In some embodiments, the adapter 215 may for example be arranged to set the sample time/time offset as a given function of the communication channel quality measure such that for a given communication channel quality measure, a given sample time/offset is used. In other embodiments, the adapter 215 may be arranged to make relative adjustments to the timing, such as e.g. changing a timing offset from a previous value dependent on the communication channel quality measure. In some embodiments, the communication channel quality measure may be used to determine when to change the timing, but the actual change or setting may not be dependent on the communication channel quality measure. For example, in some embodiments, a given offset may be maintained as long as the communication channel quality measure is indicative of a quality above a given threshold. However, in response to a detection of the communication channel quality measure falling below the given threshold the offset may be changed e.g. by, or to, a random value (e.g. within a given range or interval). If this results in the communication channel quality measure changing to indicate a quality above the given threshold this new value is maintained and otherwise it is (e.g. randomly) changed again.

Adapting the sample time depending on the communication channel quality measure is particularly advantageous in many wireless power transfer systems, such as in Qi systems transferring substantial power levels. The inventors have realized that in such systems, the communication channel may substantially impact the communication and may in particular distort the channel symbol shape. For example, a square wave modulation that results from switching a modulation load in and out of will be distorted such that the received signal shape may deviate substantially from the square wave. In essence, the received modulation typically has an "eye" shaped response with the opening of the "eye" being dependent on the communication channel (as is e.g. also the case in other typical digital communications systems, such as communication by radio or transmission lines). The inventors have realized that in a wireless power transfer system, the symbol shape and specifically the received "eye" is highly dependent on the operating point, and the communication quality and reliability may vary substantially due to this change. They have further realized that very often, the variations in the communication channel with operating point is such that the variation symbol shape does not result in the "eye" completely closing but rather will result in a change of the timing of the "eye", and in particular will result in instant of the maximum opening of the "eye" changing. Accordingly, changing the timing of the sampling when the communication channel quality measure indicates that the communication channel is poor (in particular for the current sample timing), will typically result in improved communication with reduced errors. In particular, if the current operating points result in a communication "black hole" where reliable data communication is not feasible, this may be detected by the power transmitter by the determination of the communication channel quality measure falling below a threshold. The adapter 215 may then change the sample timing resulting in the sampling being at a more appropriate time (where the "eye" is more open) which may result in reliable communication and the "black hole" being avoided.

In some embodiments, the adapter 215 may specifically adapt the sample timing during the non-communication time intervals to maximize the communication channel quality measure. For example, the sample timing phase locked loop may be operated during the non-communication time intervals with an error signal dependent on the communication channel quality measure, such as specifically with an error signal that is determined to reflect the difference between the expected reference chip sequence and the received chip sequence, i.e. with the error signal being dependent on how much the chip difference measure differs from the expected chip difference measure in ideal conditions.

The sampling may often be performed by an Analog-to-Digital Converter (ADC) circuit and in the approach the adapter 215 may change the sample instant of the ADC during the non-communication time intervals. In such cases, the adapter 215 may specifically modify the ADC sample moment during the non-communication time intervals to result in a minimization in the difference between the chip difference measure and the expected ideal chip difference measure. In this way the power transmitter can make sure that the communication channel is working right before the reception of a data packet during a communication time intervals. The approach may in many situations prevent that the system operates in a communication black hole.

In some embodiments, the adapter 215 may be arranged to adapt a decision threshold for determining chip values in dependence on the communication channel quality measure.

For example, in some cases, a soft decision approach may be used for determining chip values. As a low complexity example, based on a sample value, each chip value may be determined as a first binary data value, a second binary data value, or as uncertain/undetermined. For example, if the measured value is below a first decision threshold, the binary data value may be determined as a "-1", if it is above a second decision threshold, the binary data value may be determined as a "+1", and if it is between the first and second decision thresholds it may be determined as unknown and represented as a "0". The determination of the data symbol value may then be based on a correlation of the resulting chip sequence by multiplication with local chip sequences. In this case, the uncertain/unknown chip values may effectively be ignored in the process (multiplication by zero). However, in such an approach, appropriate values for the first and second decision thresholds may be dependent on the quality of the communication channel. For example, if noise levels are low, it may be desirably to set the first and second thresholds close together resulting in only a few high noise chip values being unknown/undetermined. However, at higher noise levels, it may yield better performance to select decision thresholds that are further apart in order to reduce the risk of erroneously detected chip values (at the expense of more unknown chip values). Accordingly, the adapter 215 may be arranged to change the decision thresholds depending on the communication channel quality measure, such as e.g. by increasing/decreasing a threshold for a given data value depending on the communication channel quality measure.

In some embodiments, the system may be arranged to use synchronization sequences to synchronize the communication. The power receiver may be arranged to transmit a synchronization chip sequence which is modulated on to the power transfer signal. The data receiver 207 (or equivalently the chip difference determiner 211) is arranged to detect the synchronization chip sequence and adapt a timing of the receive function in dependence on the detection of the synchronization chip sequence.

The data receiver 207 may specifically during non-communication time intervals correlate the received chip sequences with the synchronization chip sequence (which may be predetermined and stored in suitable memory of the power receiver). If the correlation exceeds a threshold, the data receiver 207 may determine the synchronization chip sequence has been detected to be received. The timing of the detection, and specifically the timing alignment between the received chip sequence and the synchronization chip sequence when the detection occurs, may then be used to adapt the receive operation.

In some cases, the timing synchronization may for example be of the start of a communication time interval/start of a data transmission from the power receiver, the symbol time alignment for data transmissions from the power receiver, or e.g. the timing of the modulation chip sequences in the received signal.

For example, during the non-communication time intervals, the chip difference determiner 211 may continuously determine chip difference measures reflecting the chip differences between received chip sequences and the received chip sequence in order to generate a communication channel quality measure providing a channel quality estimate. In parallel, the data receiver 207 may continuously correlate the received chip sequences with a locally stored replica of the synchronization chip sequence, and if the correlation exceeds a threshold such that the synchronization chip sequence is considered to be detected, it may proceed to determine that a data transmission from the power receiver is beginning, i.e. that the non-communication time interval has finished and that a communication time interval is starting. It may then e.g. terminate the determination of chip difference measures (or at least stop updating/determining the communication channel quality measure based on the currently received chip sequence) and proceed to initialize the data receiver 207 to start receiving the data, i.e. it may start to correlate the received chip sequences with the modulation chip sequences to detect data.

Thus, in some embodiments, the data receiver is arranged to detect a presence of a synchronization chip sequence modulated on to the power transfer signal in dependence on a correlation between received chip sequences and the synchronization chip sequence, and the data receiver is arranged to adapt a timing of the receive operation in response to this detection.

The various chip sequences may be designed and selected with suitable properties for the specific embodiment and application, and may often be selected to have particularly advantageous properties.

In many embodiments, the modulation chip sequences and the reference chip sequences (idle chip sequence) have the same length, and specifically are formed by the same number of chips. For example, in many embodiments, the reference chip sequences/idle chip sequence and the modulation chip sequences are 32 chip sequences. In many embodiments, this may provide an advantageous compromise between the different properties such as complexity of correlation, required data symbol length, detection reliability, error rates etc.

Indeed, in many embodiments, the synchronization chip sequence may also have a length that is identical to the reference chip sequences/idle chip sequence and/or to the modulation chip sequences. Again, in many embodiments, the synchronization chip sequence may also have a length of 32 chips which typically will result in an advantageous trade-off between different characteristics and performance. In particular, using a 32 chip sequence is highly advantageous as it facilitates implementation using 32 bit processors which tend to be highly suitable for implementations of power transmitters and power receivers.

A particular advantage of designing the sequences to have the same length is that it may facilitate implementation and operation. In many embodiments, it may allow the same function/circuit/routine to be used for correlation and detection for the different sequences. For example, the same function or routine may be used with only a pointer to the appropriate sequence being changed.

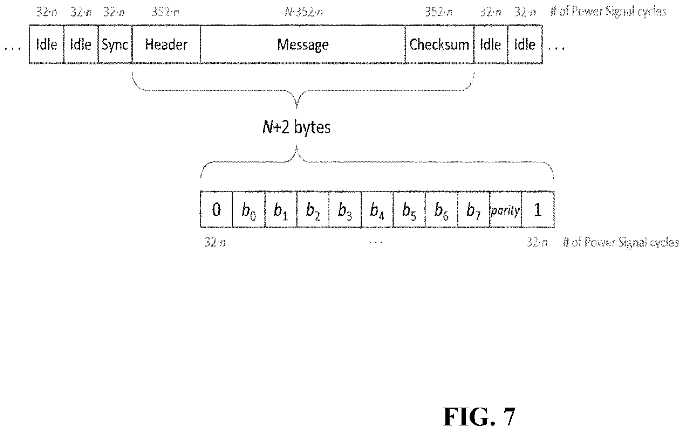

An example of a possible communication structure using chip sequence based communication with time intervals between communication time intervals including idle chip sequences is illustrated in FIG. 7. In the example, after a data packet of N+2 bytes (including header and checksum), the power receiver continues to transmit idle chip sequences until the start of the next packet. Immediately before the header, the power receiver transmits a synchronization chip sequence that may be used by the power transmitter to detect the start of the data packet and thus allow synchronization of the power transmitter to the start of the data packet.

In some embodiments, the synchronization chip sequence and the reference chip sequence are the same chip sequences. Thus, in the ideal case, the number of chip differences will be zero, and the chip difference measure may be determined to indicate how many chips of the received chip sequence are different from that of the idle chip sequence. In the ideal case, there will be no differences and the channel quality determiner 213 may determine the communication channel quality measure to indicate a decreasing quality for the chip difference measure indicating an increasing number of differences.

The reference chip sequence may in some embodiments be a binary chip sequence with an equal number of chips of each binary data chip value, such as for example an equal number of "0"s and "1"s. This may match a scenario in which the idle chip sequence is the same as the received chip sequence and thus which also has an equal number of chips of the different values. Such an approach may provide advantageous operation and facilitate operation.

In other embodiments, the received chip sequence may be different from the idle chip sequence. In such cases, the number of chip differences may be non-zero in the ideal case. However, the number of differences in the ideal case may be known and the channel quality determiner 213 may be arranged to determine the communication channel quality measure to indicate an increasing communication channel quality measure for an increasing difference between the chip difference measure value expected in the ideal case and the actual measured chip difference measure. For example, the chip difference measure may directly indicate the number of chip (value) differences. The current value of chip differences may then be compared to the expected number of chip differences in the ideal case and the communication channel quality measure may be determined to indicate a reducing quality the bigger difference between the measured number of chip differences and the expected number of chip differences.

In some embodiments, the reference chip sequence may have identical chip values. The reference chip sequence may for example comprise of all "0"s or all "1"s. The comparison may then in the ideal case result in the chip difference measure reflecting a number of chips of the idle chip sequence that have the opposite value. For example, the idle chip sequence may be a sequence with different chip values whereas the received chip sequence may be sequence with constant chip values. E.g., the idle chip sequence may be a binary sequence with a substantially equal number of the two chip values (such as specifically an equal number of "0"s and "1"s) whereas the reference chip sequence has constant chip values such as being comprised of all "0"s or " 1"s. In that case, the chip difference measure may be generated to, in the ideal case, indicate a number of differences equal to half the chip sequence length. The more the measured chip difference measure deviates from this value, the lower is the quality indicated by the determined communication channel quality measure.

As a specific example, the idle chip sequence and received chip sequence may have 32 chips with the idle chip sequence having an equal number of "0"s and "1"s and the received chip sequence being all "0"s or "1"s. In such a case, when the communication channel is working optimally (no communication errors) then the chip difference determiner 211 will determine the chip difference measure to indicate 16 chip differences. As an advantage, the result is independent of chip inversions of the communication channel which in many cases can occur due to changing system properties. In such a case, the channel quality determiner 213 can determine the communication channel quality measure to indicate optimal quality when 16 chip differences are detected. If another number of chip differences is detected, this indicates communication chip errors. The more the number of differences differ from 16, the more errors, and thus the lower the determined communication channel quality measure.

During the non-communication time interval, the power transmitter can thus determine the quality that will be experienced during the data transmission, and it can adapt operation accordingly. For example, if the quality is not sufficient, the adapter 215 can change the ADC sample moment and e.g. test the communication quality again. This may be repeated until a sufficient quality is determined.

In some embodiments, all chips of the idle chip sequence have identical chip values. The idle chip sequence may for example comprise of all "0"s or all "1"s. In such a case, the reference chip sequence may be one that includes different chip values, such as specifically may be a binary sequence with a substantially equal number of the two chip values (such as specifically an equal number of "0"s and "1"s) whereas the idle chip sequence is all "0"s or "1"s. In that case, the chip difference measure may similarly to previously described be generated to, in the ideal case, indicate a number of differences equal to half the chip length. The more the measured chip difference measure deviates from this value, the lower is the determined communication channel quality measure.

In such an approach, the reference chip sequence may be identical to one of the different modulation chip sequences. For example, one of the modulation chip sequences for a data symbol may also be used as the reference chip sequence. The modulation chip sequences for a data symbol is typically selected as one with an even number of chips and with an equal number of chips of different data values. A particular advantage of such approaches is that the same correlation and detection operation can be used to determine the chip difference measure during the non-communication time intervals as during the communication time intervals. It may allow for facilitated implementation and operation.

Such an approach may be particularly suitable for D-DSSS with differential encoding of the individual chips resulting in modulation variations during the non-communication time intervals.

In contrast to the typical approach of using chip sequences with an uneven number, the described approach may in many embodiments use chip sequences having an even number of chips. Thus, in many embodiments the idle chip sequence, reference chip sequence, and/or modulation chip sequences have an even number of chips, i.e. the length is an even number.

The chip sequences may specifically be modified M-sequences. M-sequences have desirable properties and in particular cross-correlation and autocorrelation properties. However, they inherently have an odd number of chips in order to make them periodic.

In many embodiments, one or more of then used sequences may be based on M-sequences but with an additional chip being added to generate sequences with an even number of chips. For these sequences, the M-sequence periodicity has been abandoned to create an even sequence length. An additional chip may typically be added to an M-sequence in order to result in a sequence with the number of chips of each chip value being the same.

Thus, in many embodiments, sequences are used that are based on a M-sequence with one chip added to make it an even sequence length. The value of this additional chip is chosen such that the total number of "1"s in the new sequence is equal to the total number of "0"s.

In a particular embodiment, a new structure (e.g. as described in FIG. 7) may use four different 32 bit sequences, namely an idle chip sequence, a synchronization chip sequence , a load modulation chip sequence for a "0" value; and a load modulation chip sequence for a "1" value. For 32 bit sequences, the following sequences may for example be:

| | | | | |
|---|---|---|---|---|
| Load modulation sequence for "0" (or "1"): | 11111000 | 11011101 | 01000010 | 01011000 |
| Load modulation sequence for "1" (or "0"): | 00000111 | 00100010 | 10111101 | 10100111 |
| Synchronization chip sequence: | 00011010 | 01000010 | 10111011 | 00011111 |
| Idle chip sequence: | 11111111 | 11111111 | 11111111 | 11111111 |

In the above specific example, an extra parity bit was added to the end of M-sequences to result in an even length (and with the same number of chips of each chip value). In some embodiments, the extra parity bit may be added at the start of the M-sequences. An advantage of such an approach in some embodiments may be that the sequences have the same first and last chip value. For example, the following sequences may be used:

| | | | | |
|---|---|---|---|---|
| Load modulation sequence for "0" (or "1"): | 01111100 | 01101110 | 10100001 | 00101100 |
| Load modulation sequence for "1" (or "0"): | 10000011 | 10010001 | 01011110 | 11010011 |
| Synchronization chip sequence: | 10001101 | 00100001 | 01011101 | 10001111 |
| Idle chip sequence: | 11111111 | 11111111 | 11111111 | 11111111 |

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A power transmitter (101) for wirelessly providing power to a power receiver (105) via an electromagnetic power transfer signal, the power transmitter (101) comprising:
an output circuit (203, 103) comprising a transmitter coil (103) arranged to generate the power transfer signal in response to a drive signal being applied to the output circuit (203, 103);
a driver (201) arranged to generate the drive signal;
a data receiver (207, 209) arranged to perform a receive operation to receive load modulation data symbols modulated onto the power transfer signal, each load modulation data symbol value being represented by a different modulation chip sequence, the receive operation comprising determining received data symbol values in dependence on a correlation between received chip sequences and the different modulation chip sequences;
a chip difference determiner (211) arranged to determine a chip difference measure indicative of a difference between a reference chip sequence and an idle chip sequence modulated onto the power transfer signal during at least part of some non-communication time intervals, the chip difference determiner being arranged to determine the chip difference measure in dependence on a comparison of received chip sequences to the reference chip sequence;
a channel quality determiner (213) arranged to determine a communication channel quality measure in dependence on the chip difference measure; and
an adapter (215) arranged to adapt a parameter of the receive operation in dependence on the communication channel quality measure.

2. The power transmitter of claim 1 wherein the receive operation includes determining chip values of the received chip sequences from load measurement samples, and the adapter (215) is arranged to adapt a sample timing for the load measurement samples.

3. The power transmitter of claim 1 or 2 wherein the adapter (215) is arranged to adapt a decision threshold for determining chip values.

4. The power transmitter of any previous claim wherein the different modulation chip sequences and the reference chip sequence have identical lengths.

5. The power transmitter of any previous claim wherein the reference chip sequence comprises an even number of chips.

6. The power transmitter of claim 5 wherein the reference chip sequence comprises binary chips with an equal number of chips of each binary data chip value.

7. The power transmitter of any previous claim wherein all chips of the reference chip sequence have identical chip values.

8. The power transmitter of any previous claim wherein all chips of the idle chip sequence have identical chip values.

9. The power transmitter of any previous claim wherein the reference chip sequence may be identical to one of the different modulation chip sequences.

10. The power transmitter of any previous claim wherein each of the different modulation chip sequences comprise an even number of chips.

11. The power transmitter of any previous claim wherein the reference chip sequence and the idle chip sequence are different sequences.

12. The power transmitter of any previous claim wherein the data receiver (207, 209) is arranged to detect a presence of a synchronization chip sequence modulated on to the power transfer signal, the receive operation comprising detecting the presence of the synchronization chip sequence in dependence on a correlation between received chip sequences and the synchronization chip sequence, and the data receiver (207, 209) is arranged to adapt a timing of the receive operation in response to the detection of the presence of the synchronization chip sequence.

13. A power receiver (105) for wirelessly receiving power from a power transmitter (101) via an electromagnetic power transfer signal, the power receiver (105) comprising:
an input circuit (107, 503) comprising a receiver coil (107) arranged to extract power from the power transfer signal;
a variable load (511) coupled to the input circuit and arranged to apply a modulation loading to the input circuit;
a data transmitter (509) arranged to transmit data symbols to the power transmitter (101) by controlling the variable load to load modulate the power transfer signal during communication time intervals, the data transmitter being arranged to modulate load modulation data symbols onto the power transfer signal with each load modulation data symbol value being represented by a different modulation chip sequence;
an idle sequence transmitter (513) arranged to control the variable load to load modulate an idle chip sequence onto the power transfer signal during at least some time intervals outside of the communication time intervals.

14. A method of operation for a power transmitter (101) wirelessly providing power to a power receiver (105) via an electromagnetic power transfer signal, the power transmitter (101) comprising:
an output circuit (203, 103) comprising a transmitter coil (103) arranged to generate the power transfer signal in response to a drive signal being applied to the output circuit (203, 103);
and the method comprising:
generating the drive signal;
performing a receive operation to receive load modulation data symbols modulated onto the power transfer signal, each load modulation data symbol value being represented by a different modulation chip sequence, the receive operation comprising determining received data symbol values in dependence on a correlation between received chip sequences and the different modulation chip sequences;
determining a chip difference measure indicative of a difference between a reference chip sequence and an idle chip sequence modulated onto the power transfer signal during at least part of some non-communication time intervals, the chip difference determiner being arranged to determine the chip difference measure in dependence on a comparison of received chip sequences to the reference chip sequence;
determining a communication channel quality measure in dependence on the chip difference measure; and
adapting a parameter of the receive operation in dependence on the communication channel quality measure.

15. A method of operation for a power receiver (105) wirelessly receiving power from a power transmitter (101) via an electromagnetic power transfer signal, the power receiver (105) comprising:
an input circuit (107, 503) comprising a receiver coil (107) arranged to extract power from the power transfer signal; and
a variable load (511) coupled to the input circuit and arranged to apply a modulation loading to the input circuit;
the method comprising:
transmit data symbols to the power transmitter (101) by controlling the variable load to load modulate the power transfer signal during communication time intervals, load modulation data symbols being modulated onto the power transfer signal with each load modulation data symbol value being represented by a different modulation chip sequence; and
controlling the variable load to load modulate an idle chip sequence onto the power transfer signal during at least some time intervals outside of the communication time intervals.
